# FASCICULE DE BREVET EUROPEEN

(11) **EP 2 406 123 B1**
(45) Date de publication et mention de la délivrance du brevet: **20.02.2013**
(21) Numéro de dépôt: 09738309.5
(22) Date de dépôt: 31.03.2009
(51) Int. Cl.: B62K 19/02, B62K 19/18, B62K 19/14, B62K 3/04, B62K 3/02, B62K 3/08, B62K 25/30

(54) **CADRE POUR CYCLE ET CYCLE COMPORTANT UN TEL CADRE**
FAHRRADRAHMEN UND FAHRRAD MIT DERARTIGEM RAHMEN
BICYCLE FRAME AND BICYCLE COMPRISING SUCH A FRAME

(30) Priorité: 02.04.2008 FR 0801799
(43) Date de publication de la demande: 18.01.2012
(73) Titulaire: Gaillard, Gilles André Raymond, 05260 Chabottes (FR)
(72) Inventeur: Gaillard, Gilles André Raymond, 05260 Chabottes (FR)
(74) Mandataire: Verdier, Louis
(86) Numéro de dépôt international: PCT/FR2009/000378
(87) Numéro de publication internationale: WO 2009/133275

(56) Documents cités:
- EP-A- 0 026 713
- FR-A- 396 008
- FR-A- 594 647
- FR-A- 877 549
- GB-A- 1 281 731
- GB-A- 2 361 463

## Description

### Domaine technique de l'invention.

L'invention est du domaine des cadres pour cycles, et plus spécifiquement du domaine de tels cadres adaptés pour des vélos tout terrain out analogue. Elle a pour objet un cadre dont la structure est particulièrement adaptée pour de tels vélos tout terrain destinés à progresser en milieu difficile, tel qu'irrégulier voire chaotique. Plus spécifiquement, l'invention a pour objet un cadre pour cycle dont la structure est adaptée à la pratique de l'activité de plein air consistant en la descente sur sol de forte déclivité et enneigé. L'invention a aussi pour objet un cycle comportant un tel cadre.

### Etat de la technique.

Dans sa généralité, un cycle est composé d'un cadre qui est porteur à son extrémité arrière d'une selle et d'une fourche arrière pour le montage tournant d'une roue arrière. Le cadre est aussi porteur à son extrémité avant d'un guidon et d'une fourche avant sur laquelle est montée tournante une roue avant. Les notions d'avant et arrière sont à considérer au regard du sens de progression du cycle. Des moyens d'entraînement de la roue arrière permettent au cycle de progresser sur le sol. Communément, de tels moyens d'entraînement sont constitués d'un pédalier qui est monté sur le cadre en zone inférieure médiane de ce dernier. Les notions inférieure et supérieure sont à considérer au regard de la position du cadre par rapport au sol lorsqu'il est assemblé aux autres éléments du cycle, et notamment avec les roues, sans préjuger de l'inclinaison par rapport au sol des éléments désignés comme étant en position supérieure ou inférieure. Le pédalier est en relation avec la roue arrière par l'intermédiaire de moyens de transmission, tel que du type à pignons et chaîne de transmission.

L'évolution des techniques a conduit les concepteurs à proposer des moyens d'entraînement motorisés à partir de l'énergie électrique. Le cadre supporte une batterie ou organe analogue de réserve d'énergie électrique, pour alimenter en énergie un moteur d'entraînement de la roue avant et/ou de la roue arrière. La batterie est aussi exploitée pour l'alimentation en énergie d'organes annexes du cycle, et plus particulièrement des organes d'éclairage. Se pose un premier problème lié à l'organisation de la structure du cadre qui doit permettre l'intégration de la batterie sans porter atteinte aux facultés visées pour l'utilisation spécifique de ce cadre.

Dans le domaine particulier des vélos tout terrain, des moyens de suspension arrière sont interposés entre la selle et le châssis et des moyens de suspension avant sont interposés entre le guidon et la roue avant, en étant notamment intégrés à la fourche avant. La structure du cadre est couramment agencée en ossature métallique dont les éléments sont fixés les uns aux autres pour offrir les qualités de résistance souhaitées compte tenu des efforts que le cycle est destiné à supporter en milieu tout terrain. De telles dispositions visent notamment à procurer un confort au cycliste évoluant en terrain chaotique, la structure du cadre étant spécifiquement étudiée pour être à la fois légère et robuste, en offrant une résistance mécanique et une souplesse de suspension entre les roues et le cadre qui sont adaptées aux conditions particulières d'évolution du vélo sur des chemins irréguliers et chaotiques, voire pour une utilisation du vélo selon des figures sportives impliquant des efforts sur le cadre auxquels il doit résister.

Il apparaît donc que le cadre constitue un élément structurel essentiel selon la destination du cycle, même si cette destination spécifique n'interdit pas une utilisation du cycle pour d'autres destinations que celle initialement prévues. Le cadre est couramment formé à partir de tubes en métal léger, tel qu'en aluminium notamment, qui sont soudés les uns aux autres. Les autres éléments structurels du cycle dont le cadre est porteur, tels que la selle, les moyens de suspension arrière et la fourche arrière, ou encore le guidon et la fourche avant, voire le cas échéant les moyens de suspension avant, sont fixés sur le cadre.

Il a été proposé divers cadres pour cycle comportant des agencements spécifiques. Par exemple, selon le document GB2361463 (CONTINENTAL ENG SYST LTD), le cadre comprend une poutre supérieure et une poutre inférieure gui sont entretoisées par un système triangulé. Ce système triangulé comprend des tringles qui sont assemblées deux à deux pour former des croisillons, chaque couple de tringles assemblées étant en prise sur les poutres. Les couples de tringles sont indépendants l'un de l'autre, en étant individuellement assemblés sur les poutres inférieure et supérieure du cadre et en étant fixés sur des platines solidaires des poutres. La fixation des tringles entre elles et sur les platines est réalisée par l'intermédiaire d'organes de fixation dédiés. Par exemple encore selon le document FR877549 (MERCIER Ets) des éléments structurels agencés en tubes sont assemblés entre eux de sorte qu'ils forment un système triangulé composant le cadre. Pour améliorer la résistance mécanique de la jonction des tubes entre eux, la surface de contact entre les éléments tubulaires est accrue à partir de la formation d'échancrures ménagées dans les tubes et/ou dans des organes constitutifs du cadre, tel que le tube de direction ou le tube de selle, pour finalement accroître la surface de soudage des tubes entre eux.

### Objet de l'invention.

Le but général de la présente invention est de proposer un cadre pour cycle du type tout terrain ou analogue qui concilie les contraintes liées à sa légèreté et à sa résistance mécanique au regard de son utilisation en milieu chaotique, voire aussi au regard d'une utilisation du cycle selon des figures sportives susceptibles de générer des efforts importants et/du spécifiques sur le cadre. L'invention a aussi pour objet un cycle comportant un tel cadre.

Il est plus spécifiquement proposé par la présente invention un tel cadre dont la structure soit particulièrement adaptée à une utilisation du cycle non seulement en milieu tout terrain, mais surtout en milieu enneigé. Plus particulièrement, le cadre visé par la présente invention est recherché apte à la pratique d'une activité de plein air spécifique de descente sur sol enneigé, à forte déclivité notamment. Il ne doit pas être perdu de vue que le cadre doit pouvoir être obtenu à moindres couts pour ne pas faire obstacle à sa commercialisation compte tenu de sa spécificité d'utilisation, ni à la possibilité d'exploiter le cycle pour des applications plus communes, tel que pour une activité tout terrain plus habituelle, sur route et/ou en milieu urbain.

Le cadre pour cycle de la présente invention comprend une ossature formée d'organes structurels assemblés entre eux. Ces organes structurels comprennent au moins un organe de jonction arrière avec au moins une colonne arrière qui est porteuse d'au moins une selle. Une roue arrière est susceptible d'être montée sur le cycle de manière indifféremment rigide ou suspendue. Plus particulièrement, le cycle est accessoirement équipé de moyens de suspension arrière qui prennent un appui antagoniste contre le cadre et contre au moins un bras de liaison avec au moins une roue arrière. Dans ce cas, l'organe de jonction arrière est en outre porteur de moyens de liaison avec ces moyens de suspension arrière. Les organes structurels du cadre comprennent aussi au moins un organe de jonction avant avec une fourche de liaison entre au moins une roue avant et un guidon, la fourche avant étant susceptible d'être équipée de moyens de suspension avant. Accessoirement, un organe de jonction médian intégré au cadre est apte à recevoir de manière tournante un pédalier. L'ossature est principalement agencée en structure triangulée associant au moins une poutre supérieure et au moins une poutre inférieure, qui sont entretoisés par des éléments structurels.

Selon la présente invention, un tel cadre est principalement reconnaissable en ce que les éléments structurels sont constitués de lattes qui sont assemblées au moins deux à deux pour former des organes de renfort, les lattes étant plus particulièrement disposées dans leur plan général transversalement au plan général du cadre. Les organes de renfort sont agencés en croisillon, ou agencement de triangulation analogue, et sont en pluralité, en étant successivement interposés entre la poutre supérieure et la poutre inférieure auxquelles ils sont individuellement solidarisés, notamment par intermédiaire de l'extrémité des lattes qui les constituent respectivement.
Les lattes sont avantageusement des lattes stratifiées à fibres croisées d'une strate à l'autre. Selon une forme préférée de réalisation, le matériau constitutif des éléments constitutifs de l'ossature est le bois, frêne notamment.

Le cadre offre une robustesse et une élasticité de structure globale particulièrement adaptées à une utilisation du cycle en milieu chaotique, et donc d'être utilisé pour un vélo tout terrain ou analogue. Plus particulièrement, les efforts induits par la prise d'appui au sol du cycle conjointement ou isolément par l'intermédiaire des roues avant et/ou arrière sont amortis par la structure triangulée formant principalement l'ossature et individuellement par les éléments structurels. Les performances du cadre sont obtenues par l'agencement de la structure triangulée, qui est composée des organes de renfort agencés en croisillons et successivement interposés entre les poutres auxquelles ils sont individuellement en prise, et par l'agencement en lattes des éléments structurels, qui offrent un coefficient d'élasticité satisfaisant. De telles performances sont particulièrement adaptées pour une pratique sportive dans laquelle des efforts sont exercés latéralement sur les roues du cycle lors de l'exécution de figures sportives ou lors d'un parcours sur sol enneigé à forte déclivité. La capacité d'amortissement des efforts d'une part par la structure triangulée, composée des organes de renfort qui sont successivement et individuellement en prise sur les poutres, et d'autre part individuellement par les éléments structurels agencés en lattes préférentiellement stratifiées à fibres croisées d'une strate à l'autre, permet de réduire les charges appliquées aux poutres. En outre, une telle structure du cadre offre un comportement favorisant l'équilibre et la stabilité du cycle sur une surface enneigée et le cas échéant sur un sol à forte déclivité, y compris lors de l'exercice sportif consistant à effectuer des figures avec le cycle, telles que dérapage et/ou freinage brusques sur la neige. L'ossature est préférentiellement formée à partir d'un matériau cellulaire naturel, bois plus particulièrement et notamment est formée à partir du frêne dont les caractéristiques mécaniques offrent les qualités requises de légèreté, de souplesse et néanmoins de résistance pour un module d'élasticité satisfaisant. En outre, la nature fibreuse du bois permet d'exploiter cette caractéristique pour agencer les éléments structurels de l'ossature en éléments stratifiés, dont les fibres sont croisées d'une strate à l'autre pour accroître leur résistance. Cependant, l'ossature est aussi susceptible d'être formée à partir d'éléments structurels en résine, chargée ou non, réputée plus légère, notamment en vue d'une application du cadre à un cycle d'un autre type, tel que cycle de route.

De préférence, la structure triangulée intègre au moins les organes de jonction respectivement avant et arrière qui sont en prise sur les poutres indifféremment directement et/ou par l'intermédiaire d'organes de renfort et/ou d'au moins un élément structurel dédiés. Le cas échéant, l'ossature intègre aussi en zone basse médiane un organe de jonction médian avec un pédalier à partir de la réception tournante de l'arbre de rotation de ce dernier.

Les élément structurels sont avantageusement assemblés par emboîtement latérale entre eux au moins deux à deux pour la formation des organes de renfort Cet emboîtement latéral est plus particulièrement obtenu au moyen de saignées latérales débouchantes, qui sont ménagées dans la tranche des éléments structurels. De telles saignées sont aptes à coopérer entre elles de l'un à l'autre des éléments structurels, pour constituer des moyens d'assemblage par emboîtement de ces éléments structurels entre eux afin de construire les organes de renfort. Les modalités proposées d'assemblage des éléments structurels entre eux pour la formation des organes de renfort permettent de conférer au cadre un encombrement latéral défini hors tout par les organes de renfort, qui n'excède pas celui d'un élément structurel qui les constitue, et notamment la largeur des lattes constitutives des éléments structurels.

Les organes de renfort et/ou les éléments structurels sont avantageusement solidarisés aux poutres et/ou le cas échéant aux organes de jonction, par des moyens de solidarisation du type à tenon et mortaise ou analogue, qui sont respectivement ménagés à l'extrémité des éléments structurels et sur les poutres et/ou sur les organes de jonction. Plus spécifiquement, les tenons sont ménagés aux extrémités des éléments structurels tandis que les mortaises sont ménagées dans les poutres inférieure et supérieure, et dans les organes de jonction avant et arrière, et le cas échéant l'organe de jonction médian. La solidarisation obtenue entre les organes de renfort et les poutres et/ou les organes de jonction est robuste, indépendamment d'un organe de renfort à l'autre, sans affecter la souplesse et la résistance, recherchées du cadre pour l'amortissement des efforts auxquels il est amené à être soumis lors de la progression du cycle sur un terrain chaotique, voire enneigé.

Les poutres sont de préférence subdivisées en deux poutres élémentaires qui ménagent entre elles un passage de réception des tenons que comportent les éléments structurels à leurs extrémités. Un tel passage peut être aisément doté d'une ou de plusieurs mortaises aptes à recevoir un tenon respectif pour la solidarisation des poutres avec les éléments structurels et/ou les organes de renfort. De telles dispositions offrent notamment une plus grande liberté de conformation de l'ossature, et plus particulièrement de la structure triangulée, et permet de réduire le poids et les coûts d'obtention du cadre. En outre, la solidarisation par tenon et mortaise entre les éléments structurels et les poutres est facilitée tout en étant confortée.

De préférence, l'ossature comprend en outre une enveloppe extérieure formée à partir d'au moins une paroi rapportée sur les faces latérales du cadre suivant la direction d'extension des poutres. Le matériau constitutif de l'enveloppe est de préférence le même que celui utilisé pour les autres éléments structurels constitutifs de l'ossature, bois notamment. La fonction principale de l'enveloppe est de préserver l'ossature de l'environnement extérieur et notamment de préserver les alvéoles formées par la triangulation de la structure qui la constitue d'un éventuel comblement par des salissures, de la boue ou de la neige par exemple. Cette enveloppe est susceptible d'être formée à partir d'un autre matériau que celui de l'ossature triangulée, tel qu'à partir d'une résine ou autre matériau de synthèse analogue. D'une manière générale, l'utilisation de la résine pour former les différents éléments constitutifs de l'ossature est non préférée, mais est susceptible de réduire les coûts d'obtention du cadre, à partir de la formation de ces éléments structurels par moulage d'un matériau plastique et d'un collage ou d'un soudage de ces éléments de résine entre eux.

L'enveloppe est de préférence formée à partir d'un matériau fibreux, bois notamment, dont les fibres sont orientées transversalement aux fibres des éléments structurels. Selon une forme avantageuse de réalisation, l'enveloppe comporte des fenêtres de passage des tenons ménagés aux extrémités des éléments structurels pour son montage sur le cadre. Plus particulièrement, les tenons s'étendent à travers les ouvertures que comporte l'enveloppe pour la fixation par emboîtement de cette dernière à la structure triangulée. Une telle fixation par emboîtement est susceptible d'être complétée par d'autres moyens de fixation, tel que par vissage ou analogue. Les tenons utilisés pour la solidarisation des éléments structurels aux poutres sont en outre mis à profit pour le montage de l'enveloppe sur l'ossature, avec pour avantage de limiter la complexité et le nombre d'éléments de fixation nécessaires pour la structuration et le montage du cadre. D'autres moyens de fixation peuvent néanmoins être utilisés indépendamment de l'assemblage de l'enveloppe par emboîtement sur la structure triangulée, tel que par collage et/ou encore à partir de l'utilisation d'instruments de fixation, notamment vis, attaches ou organes analogues.

L'un quelconque au moins des organes de jonction est constitué d'un corps muni d'au moins une mortaise de réception d'un tenon que comportent les éléments structures, et de moyens de jonction avec les organes du cycle auxquels ils sont respectivement associés.

selon diverses variantes possibles de réalisation, les corps constitutifs des organes de jonction sont individuellement constitués indifféremment d'un organe monobloc ou d'un organe formé à partir de poutrelles et/ou de blocs assemblés entre eux et munis d'un revêtement.

Une alvéole au moins formée par la triangulation de l'ossature est avantageusement exploitée pour constituer un compartiment de réception d'une batterie, avec pour avantage de protéger cette dernière de l'environnement du cycle et de ne pas constituer une gêne pour le cycliste. Selon une forme préférée de réalisation, le compartiment est interposé entre l'organe de jonction arrière et indifféremment la poutre supérieure ou la poutre inférieure. Selon une première variante de réalisation, au moins un élément structurel délimitant ledit compartiment est en prise sur l'une au moins des poutres inférieure et/ou supérieure et sur l'organe de jonction arrière. Selon une deuxième variante de réalisation, au moins un élément structurel délimitant ledit compartiment est en prise sur un organe de renfort constitutif de l'ossature et indifféremment sur l'organe de jonction arrière ou l'organe de jonction médian. Un tel élément structurel délimitant le compartiment est susceptible le coiffer ou de constituer l'une de ses parois latérales. Dans le cas où cet élément structurel délimitant le compartiment est seulement en prise sur la poutre supérieure, celui-ci est avantageusement agencé en couvercle de fermeture du compartiment, en étant rapporté par emboîtement ou analogue sur la poutre supérieure de sorte qu'il constitue une trappe d'accès au compartiment. Dans le cas où cet élément structurel est conjointement en prise sur la poutre supérieure et sur la poutre inférieure, une trappe latérale d'accès au compartiment est aisément ménagée sur l'ossature, en étant par exemple organisée en porte articulée sur l'ossature ou analogue. Une telle trappe d'accès latéral est aussi susceptible d'être ménagée dans le cas où le compartiment est situé entre l'organe de jonction arrière et la poutre inférieure, voire entre l'organe de jonction arrière et un élément structurel de l'ossature en prise sur un organe de renfort et sur l'organe de jonction médian.

L'invention a aussi pour objet un cycle équipé d'un cadre comportant les caractéristiques, prises seules ou en combinaison, qui viennent d'être exposées.

Un tel cycle est susceptible d'être équipé de moyens de propulsion qui sont indifféremment du type à énergie musculaire, mettant en oeuvre un pédalier notamment, ou du type à énergie électrique mettant en oeuvre un moteur électrique d'entraînement de la roue avant et/ou de la roue arrière. Un tel moteur électrique est notamment alimenté en énergie à partir de la batterie ou analogue logée dans le compartiment dédié que comporte le cadre.

### Description des figures.

La présente invention sera mieux comprise à la lecture de la description qui va en être faite d'un exemple de réalisation, en rotation avec les figures des planches annexées, dans lesquelles :
La fig.1 est une illustration de côté d'un cycle équipé d'un cadre selon la présente invention.
La fig.2 est une illustration en perspective d'un cadre équipant le cycle représenté sur la fig.1.
Les fig.3 et fig.4 sont des illustrations de côté de poutres respectivement inférieure et supérieure constitutives du cadre représenté sur la fig.2.
Les fig.5 à fig.11 sont des illustrations d'éléments structurels constitutifs du cadre représenté sur la fig.2, respectivement vu en tranche pour les schémas (a) et vu de plat pour les schémas (b).
Les fig.12(a) et fig.12(b) sont des illustrations d'un organe de jonction avant constitutif du cadre représenté sur la fig.2, respectivement vu de côté et vu de dessus.
Les fig.13(a) et fig.13(b) sont des illustrations d'un organe de jonction médian constitutif du cadre représenté sur la fig.2, respectivement vu de côté et vu de dessus.
La fig.14 est une illustration de côté d'un organe de jonction arrière constitutif du cade représenté sur la fig.2.

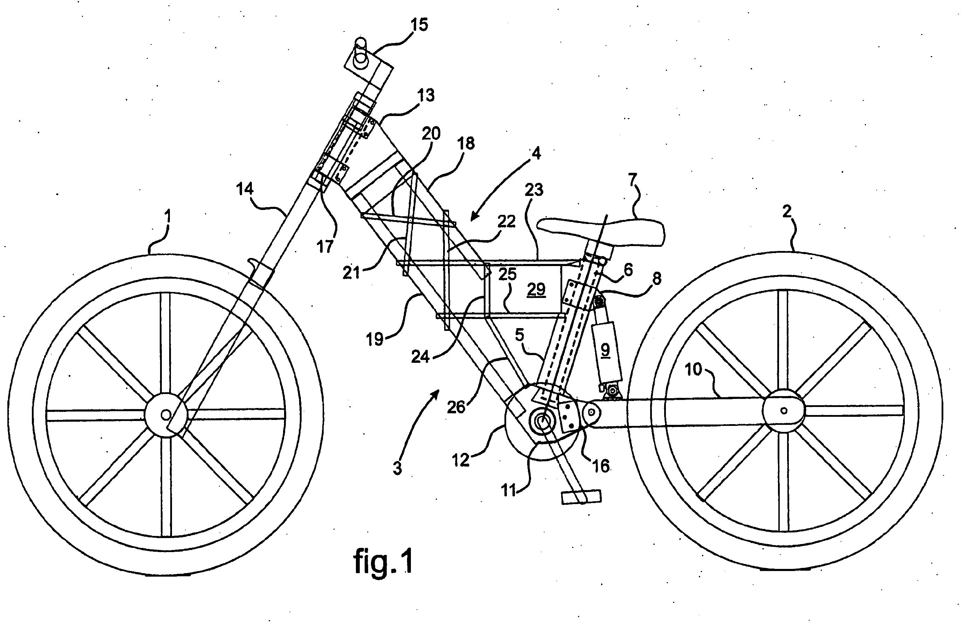

Sur la fig.1, un cycle est globalement composé d'une roue avant 1 et d'une roue arrière 2, soutenant un cadre 3. Ce cadre 3 comprend une ossature 4 formée d'organes structurels assemblés entre eux. Un organe de jonction arrière 5 est prévu pour l'assemblage du cadre 3 avec la roue arrière 2. Cet assemblage est réalisé par l'intermédiaire d'une colonne arrière 6 porteuse d'une selle 7 et de moyens de liaison 8 avec des moyens de suspension arrière 9, qui prennent un appui antagoniste entre l'organe de jonction arrière 5, et un bras arrière 10 porteur de la roue arrière 2, qui est en prise sur un organe de jonction médian 11 constitutif de l'ossature 4. Cet organe de jonction médian 11 est susceptible d'être exploité pour la réception tournante d'un pédalier 12 qui est constitutif de moyens de progression du cycle. Un organe de jonction avant 13 constitutif du cadre 3 est en prise sur une colonne avant 14 porteuse de la roue avant 1 et d'un guidon 15. De manière connue dans le domaine, une telle colonne avant 14 est susceptible de loger des moyens de suspension avant interposés entre le cadre 3 et/ou le guidon 15 et la roue avant 1. Les organes de jonction 5,11,13 sont individuellement constitués d'un organe monobloc ou sont constitués de différentes pièces assemblées entre elles par emboîtement, de préférence du type à tenon ou mortaise, et/ou par collage et/ou par l'intermédiaire d'éléments de fixation tels que vis, attaches ou éléments de fixation analogues. Ces organes de jonction sont en prise sur des moyens de jonction 8,16,17 avec les organes du cycle auxquels ils sont respectivement associés, tels que la colonne avant 14 pour l'organe de jonction avant 13, la colonne arrière 6 et les moyens de suspension arrière 9 pour l'organe de jonction arrière 5, ou encore avec le pédalier 12 et le bras 10 porteur de la roue arrière 2 pour l'organe de jonction médian 11.

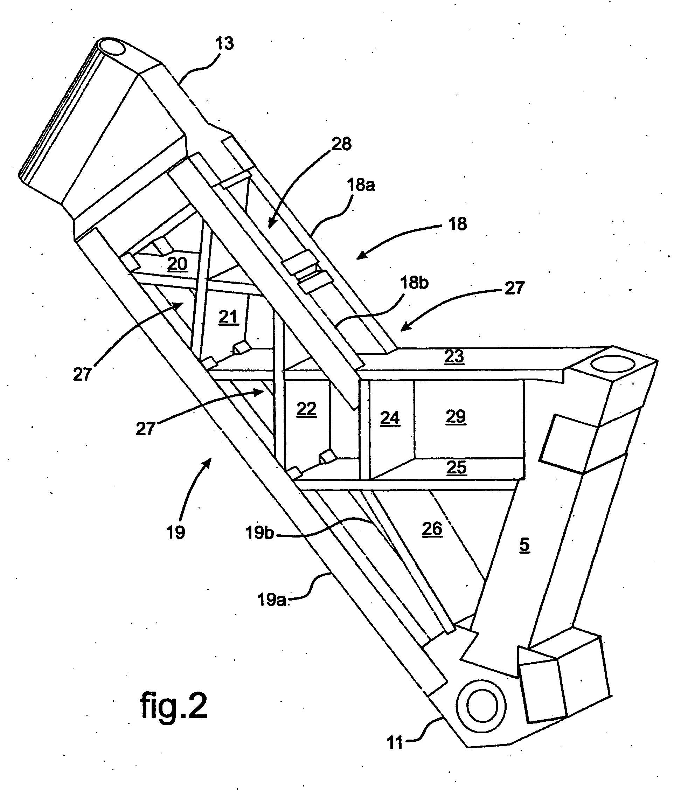

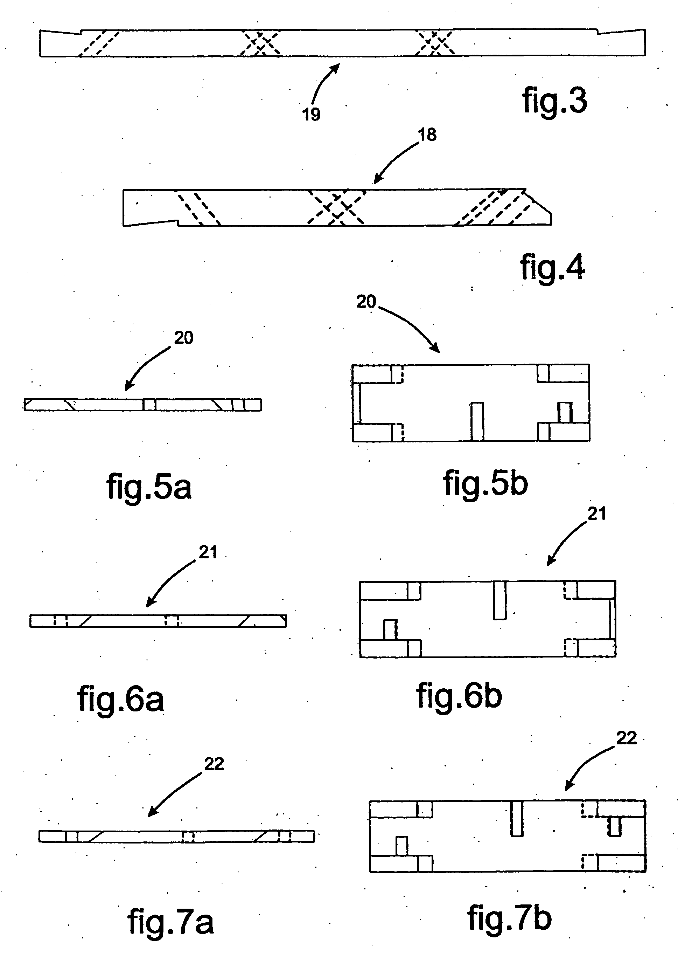

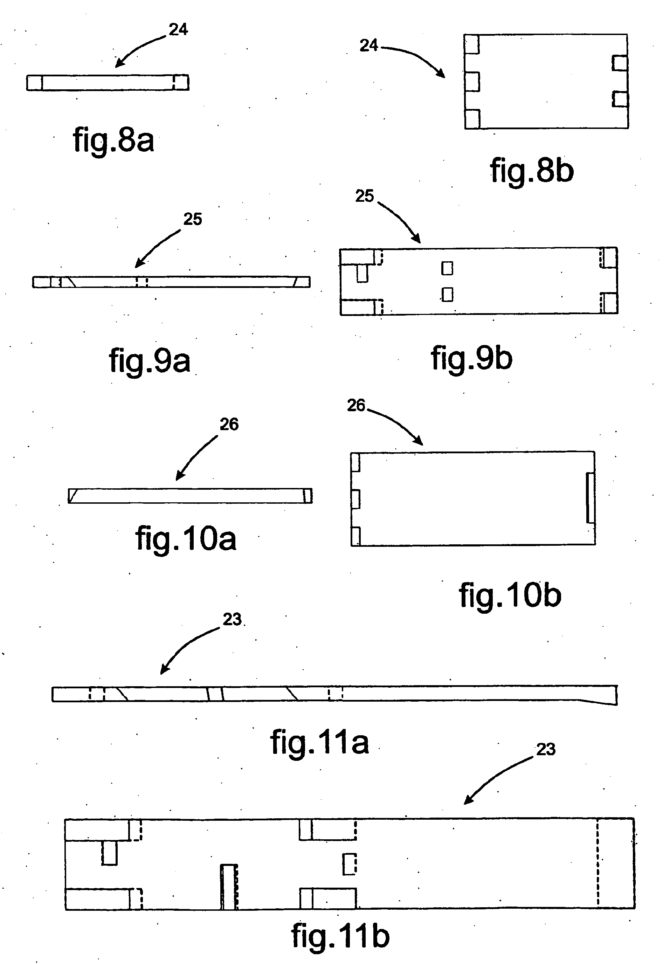

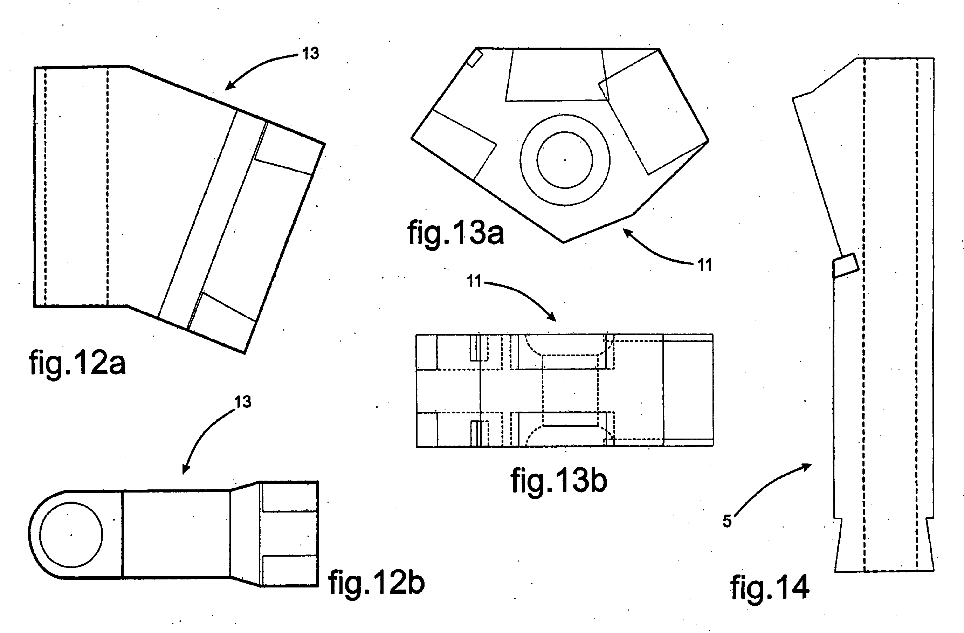

Sur la fig.2, l'ossature est principalement agencée en structure triangulée associant au moins une poutre supérieure 18 et au moins une poutre inférieure 19, qui sont entretoisées par des éléments structurels 20 à 26 assemblés entre eux pour former des organes de renforts 27 conformés en croisillons. Ces organes de renforts 27 s'étendent successivement suivant l'extension longitudinale des poutres 18,19, auxquelles les éléments structurels 20 à 26 sont solidarisés. En se reportant par ailleurs aux fig.3 à fig.14, la structure triangulée intègre les organes de jonction avant 13, médian 11 et arrière 5, sur lesquels sont assemblés les éléments structurels 20 à 26 par des moyens d'emboîtement du type à tenons et mortaises. Ce type d'emboîtement est en outre exploité pour l'assemblage des organes de renfort 27, plus spécifiquement composés chacun d'au moins deux éléments structurels 20 à 26, avec les poutres respectivement inférieure 19 et supérieure 18. Pour favoriser l'assemblage par tenons et mortaises entre les éléments structurels 20 à 26 et les poutres supérieure 18 et inférieure 19, celles-ci sont chacune subdivisées en deux poutres élémentaires, respectivement 18a,18b et 19a,19b, de sorte qu'elles ménagent entre elles un passage 28 à travers lequel s'étendent les tenons que comportent les éléments structurels 20,21,22 par exemple. L'émergence de tels tenons peut avantageusement être mise à profit pour la fixation d'une paroi constitutive d'une enveloppe (non représentée) revêtant le cadre 3 en vue de sa protection. Plus particulièrement, chacune des poutres élémentaires 18a,18b et 19a,19b comporte une portion de mortaise coopérante avec une partie latérale dédiée du tenon correspondant que comportent les éléments structurels à leur extrémité.

Les éléments structurels 20 à 26 sont assemblés entre eux par emboîtement latéral au moins deux à deux pour la formation des organes de renfort 27. En se reportant sur les vues individuelles des éléments structurels fig.3 à fig.11, ceux-ci comportent dans leur tranche des saignées latérales débouchantes pour l'emboîtement des éléments structurels entre eux, de manière à former les organes de renfort 27.

En revenant sur la fig.2, une alvéole formée par la triangulation de l'ossature 4 est exploitée pour ménager un compartiment 29 de réception d'une batterie. Une telle batterie est destinée à l'alimentation en énergie d'organes d'éclairage équipant le cycle, voire encore d'un moteur électrique d'entraînement en rotation de la roue avant 1 et/ou de la roue arrière 2. Sur la variante de réalisation illustrée, ce compartiment 29 est situé entre l'organe de jonction arrière 5 et la poutre supérieure 18, et entre au moins un élément structurel 24,25 qui est en prise directement et/ou indirectement avec la poutre inférieure 19, la poutre supérieure 18 et l'organe de jonction arrière 5. Selon une autre variante de réalisation non représentée, un compartiment analogue est susceptible d'être ménagé entre l'organe de jonction arrière 5 et la poutre inférieure 19, voire plus précisément selon l'encombrement de la batterie entre l'organe de jonction arrière 5 et des éléments structurels du cadre, tels que ceux 25 et 26 représentés.

## Revendications

1. Cadre pour cycle comprenant une ossature (4) formée d'organes structurels assemblés entre eux, dont au moins un organe de jonction arrière (5) avec au moins une colonne arrière (6) porteuse d'au moins une selle,(7), et dont au moins un organe de jonction avant (13) avec une fourche (14) de liaison entre au moins une roue avant (1) et un guidon (15), l'ossature (4) étant principalement agencée en structure triangulée associant au moins une poutre supérieure (18) et au moins une poutre inférieure (19), qui sont entretoisées par des éléments structurels (20 à 26), **caractérisé en ce que** les éléments structurels (20 à 26) sont constitués de lattes qui sont assemblées au moins, deux à deux pour former des organes de renfort (27) agencés en croisillon, ces organes de renfort (27) étant en pluralité et étant successivement interposés entre la poutre supérieure (18) et la poutre inférieure (19) auxquelles ils sont individuellement solidarisés.

2. Cadre pour cycle selon la revendication 1, **caractérisé en ce que** les lattes (20 à 26) sont des lattes stratifiées à fibres croisées d'une strate à l'autre.

3. Cadre pour cycle selon l'une quelconque des revendications précédentes, **caractérisé en ce que** les organes de renfort (27) sont solidarisés aux poutres (18,19) par l'intermédiaire de l'extrémité des lattes (20,25) qui les constituent respectivement.

4. Cadre pour cycle selon l'une quelconque des revendications précédentes, **caractérisée en ce que** les éléments structurels (20 à 26) sont assemblés entre eux au moyen de saignées latérales débouchantes qui sont ménagées dans la tranche des éléments structurels (20 à 26).

5. Cadre pour cycle selon l'une quelconque des revendications précédentes, **caractérisé en ce que** la structure triangulée (4) intègre au moins les organes de jonction respectivement avant (13) et arrière (5), qui sont en prise sur les poutres (18,19) indifféremment directement et/ou par l'intermédiaire d'organes de renfort (27) et/ou d'au moins un élément structurel (20 à 26) dédiés.

6. Cadre pour cycle selon l'une quelconque des revendications précédentes, **caractérisé en ce que** les organes de renfort (27) et/ou les éléments structurels (20 à 26) sont solidarisés aux poutres (18,19) et/ou le cas échéant aux organes de jonction (13,5,11) par des moyens de solidarisation du type à tenon et mortaise respectivement ménagés à l'extrémité des éléments structurels (20 à 26) et sur les poutres (18,19) et/ou les organes de jonction (13,5,11).

7. Cadre pour cycle selon la revendication 6, caractérisé ence que les poutres (18,19) sont subdivisées en deux poutres élémentaires (18a,18b ;19a,19b) ménageant entre elles un passage (28) de réception des tenons pour la solidarisation des poutres (18,19) avec les éléments structurels (20 à 26).

8. Cadre pour cycle selon l'une quelconque des revendications précédentes, **caractérisée en ce que** le matériau constitutif de l'ossature (4) est le bois.

9. Cadre pour cycle selon l'une quelconque des revendications précédentes, **caractérisé en ce que** l'ossature (4) comprend en outre une enveloppe extérieure formée à partir d'au moins une paroi rapportée sur les faces latérales du cadre (3) suivant la direction d'extension des poutres (18,19).

10. Cadre selon la revendication 9, **caractérisé en ce que** la paroi constitutive de l'enveloppe est formée à partir d'un matériau fibreux, dont les fibres sont orientées transversalement aux fibres des éléments structurels (20 à 26).

11. Cadre pour cycle selon l'une quelconque des revendications 9 et 10, **caractérisé en ce que** l'enveloppe comporte des fenêtres de passage des tenons ménagés aux extrémités des éléments structurels (20 à 26) pour son montage sur le cadre (3).

12. Cadre pour cycle selon l'une quelconque des revendications précédentes, **caractérisé en ce qu'**une alvéole au moins formée par la triangulation de l'ossature (4) est exploitée pour constituer un compartiment (29) de réception d'une batterie.

13. Cadre pour cycle selon la revendication 12, **caractérisé en ce que** le compartiment (29) est interposé entre l'organe de jonction arrière (5) et indifféremment la poutre supérieure (18) ou la poutre inférieure (19).

14. Cadre pour cycle selon la revendication 13, **caractérisé en ce qu'**au moins un élément structurel (23,24,25) délimitant ledit compartiment (29) est en prise sur l'une au moins des poutres inférieure (19) et/ou supérieure (18) et sur l'organe de jonction arrière (5).

15. Cadre pour cycle selon l'une quelconque des revendications 13 et 14, **caractérisé en ce qu'**au moins un élément structurel (25,26) délimitant ledit compartiment (29) est en prise sur un organe de renfort (27) constitutif de l'ossature et indifféremment sur l'organe de jonction arrière (5) ou sur un organe de jonction médian (11).

16. Cadre pour cycle selon la revendication 13, **caractérisé en ce qu'**un élément structurel (23) délimitant le compartiment (29) étant seulement en prise sur la poutre supérieure (18), celui-ci est agencé en couvercle de fermeture du compartiment (29).

17. Cycle comportant un cadre selon l'une quelconque des revendications précédentes.

18. Cycle selon la revendication 17, **caractérisé en ce que** le cycle est équipé de moyens de propulsion qui sont indifféremment sur type à énergie musculaire ou du type à énergie électrique.

## Claims

1. Frame for a cycle, comprising a framework (4) formed by structural members connected together, including at least one rear member (5) joining with at least one rear column (6) carrying at least one saddle (7), and including at least one front member (13) joining with a fork (14) connecting between at least one front wheel (1) and handlebars (15), the framework (4) being mainly arranged as a triangulated structure associating at least one top beam (18) and at least one bottom beam (19), which are braced by structural elements (20 to 26), **characterised in that** the structural elements (20 to 26) consist of slats that are assembled at least in pairs in order to form reinforcement members (27) arranged as cross-pieces, these reinforcement members (27) being in a plurality and being successively interposed between the top beam (18) and the bottom beam (19), to which they are individually secured.

2. Frame for a cycle according to claim 1, **characterised in that** the slats (20 to 26) are laminated with fibres crossed from one layer to another.

3. Frame for a cycle according to any one of the preceding claims, **characterised in that** the reinforcement members (27) are secured to the beams (18, 19) by means of the end of the slats (20, 25) that constitute them respectively.

4. Frame for a cycle according to any one of the preceding claims, **characterised in that** the structural elements (20 to 26) are connected together by means of emerging lateral kerfs that are provided in the edge of the structural elements (20 to 26).

5. Frame for a cycle according to any one of the preceding claims, **characterised in that** the triangulated structure (4) includes at least the respectively front (13) and rear (5) joining members, which are in engagement on the beams (18, 19) either directly and/or by means of dedicated reinforcement members (27) and/or at least one dedicated structural element (20 to 26).

6. Frame for a cycle according to any one of the preceding claims, **characterised in that** the reinforcement members (27) and/or the structural elements (20 to 26) are secured to the beams (18, 19) and/or where applicable to the joining members (13, 5, 11) by securing means of the tenon and mortise type respectively provided at the end of the structural elements (20 to 26) and on the beams (18, 19) and/or the joining members (13, 5, 11).

7. Frame for a cycle according to claim 6, **characterised in that** the beams (18, 19) are subdivided into two elementary beams (18a, 18b; 19a, 19b) forming between them a passage (28) for receiving the tenons for securing the beams (18, 19) to the structural elements (20 to 26).

8. Frame for a cycle according to any one of the preceding claims, **characterised in that** the material constituting the framework (4) is wood.

9. Frame for a cycle according to any one of the preceding claims, **characterised in that** the framework (4) also comprises an external envelope formed from at least one wall attached to the lateral faces of the frame (3) in the direction of extension of the beams (18, 19).

10. Frame for a cycle according to claim 9, **characterised in that** the wall constituting the envelope is formed from a fibrous material, the fibres of which are oriented transversely to the fibres of the structural elements (20 to 26).

11. Frame for a cycle according to either one of claims 9 and 10, **characterised in that** the envelope comprises windows for passage of the tenons formed at the ends of the structural elements (20 to 26) for mounting it on the frame (3).

12. Frame for a cycle according to any one of the preceding claims, **characterised in that** an alveolus at least formed by the triangulation of the framework (4) is used to constitute a compartment (29) for receiving a battery.

13. Frame for a cycle according to claim 12, **characterised in that** the compartment (29) is interposed between the rear joining member (5) and either the top beam (18) or the bottom beam (19).

14. Frame for a cycle according to claim 13, **characterised in that** at least one structural element (23, 24, 25) delimiting said compartment (29) is in engagement on at least one of the bottom (19) and/or top (18) beams and on the rear joining member (5).

15. Frame for a cycle according to either one of claims 13 and 14, **characterised in that** at least one structural element (25, 26) delimiting said compartment (29) is in engagement on a reinforcement member (27) constituting the framework and either on the rear joining member (5) or on a middle joining member (11).

16. Frame for a cycle according to claim 13, **characterised in that**, a structural element (23) delimiting the compartment (29) being solely in engagement on the top beam (18), the latter is arranged as a closure cover for the compartment (29).

17. Cycle comprising a frame according to any one of the preceding claims.

18. Cycle according to claim 17, **characterised in that** the cycle is equipped with propulsion means that are either of the muscular energy type or of the electrical energy type.

## Patentansprüche

1. Rahmen für ein Fahrrad umfassend ein Gerippe (4), das aus Strukturelementen gebildet wird, die miteinander verbunden sind, mit zumindest einem hinteren Verbindungselement (5) mit zumindest einer hinteren tragenden Stütze (6) von zumindest einem Sattel (7), und mit zumindest einem vorderen Verbindungselement (13) mit einer Gabel (14) als Verbindung zwischen zumindest einem Vorderrad (1) und einem Lenker (15), wobei das Gerippe (4) hauptsächlich in Form einer Dreieckstruktur angeordnet ist, bei der zumindest ein oberer Träger (18) und zumindest ein unterer Träger (19) zusammengefügt werden, die durch Strukturbauteile (20 bis 26) versteift werden, **dadurch gekennzeichnet, dass** die Strukturbauteile (20 bis 26) aus Latten gebildet werden, die zumindest paarweise zusammengefügt werden, um Verstrebungselemente (27) zu bilden, die kreuzförmig angeordnet sind, wobei diese Verstrebungselemente (27) in einer Vielzahl vorhanden, und nacheinander zwischen dem oberen Träger (18) und dem unteren Träger (19) eingesetzt sind, mit denen sie jeweils einzeln verbunden sind.

2. Fahrradrahmen nach Anspruch 1, **dadurch gekennzeichnet, dass** die Latten (20 bis 26) laminierte Latten sind, deren Fasern sich schichtweise kreuzen.

3. Fahrradrahmen nach irgendeinem der vorherigen Ansprüche, **dadurch gekennzeichnet, dass** die Verstrebungselemente (27) am Ende der Latten (20, 25), aus denen sie jeweils gebildet werden, mit den Trägern (18, 19) verbunden sind.

4. Fahrradrahmen nach irgendeinem der vorherigen Ansprüche, **dadurch gekennzeichnet, dass** die Strukturbauteile (20 bis 26) durch seitlich einmündende Einschnitte miteinander verbunden sind, die in die Kante der Strukturbauteile (20 bis 26) eingearbeitet sind.

5. Fahrradrahmen nach irgendeinem der vorherigen Ansprüche, **dadurch gekennzeichnet, dass** die Dreieckstruktur (4) zumindest das jeweils vordere (13) und hintere (5) Verbindungselement beinhaltet, die gleichgültig ob direkt und/oder über die zugeordneten Verstrebungselemente (27) und/ oder über zumindest ein zugeordnetes Strukturbauteil (20 bis 26) mit den Trägern (18, 19) in Eingriff stehen.

6. Fahrradrahmen nach irgendeinem der vorherigen Ansprüche, **dadurch gekennzeichnet, dass** die Verstrebungselemente (27) und/ oder die Strukturbauteile (20 bis 26) über Verbindungsvorrichtungen in der Art von Nut und Feder mit den Trägern (18, 19) oder gegebenenfalls mit den Verbindungelementen (13, 5, 11) verbunden sind, die jeweils am Ende der Strukturbauteile (20 bis 26) und auf den Trägern (18, 19) und/ oder den Verbindungelementen (13, 5, 11) eingearbeitet sind.

7. Fahrradrahmen nach Anspruch 6, **dadurch gekennzeichnet, dass** die Träger (18, 19) in zwei elementare Träger (18a, 18b, 19a, 19b) unterteilt werden, die zwischen sich einen Durchlass (28) zur Aufnahme der Federn zur Verbindung der Träger (18, 19) mit den Strukturbauteilen (20 bis 26) bilden.

8. Fahrradrahmen nach irgendeinem der vorherigen Ansprüche, **dadurch gekennzeichnet, dass** der Werkstoff, aus dem das Gerippe (4) besteht, Holz ist.

9. Fahrradrahmen nach irgendeinem der vorherigen Ansprüche, **dadurch gekennzeichnet, dass** das Gerippe (4) darüber hinaus eine Außenhülle umfasst, die zumindest durch eine Wandung gebildet wird, die in der Ausbreitungsrichtung der Träger (18, 19) an den Seitenflächen des Rahmens (3) angebracht wird.

10. Rahmen nach Anspruch 9, **dadurch gekennzeichnet, dass** die Wandung, die die Hülle bildet, aus einem faserigen Material gebildet wird, dessen Fasern quer zu den Fasern der Strukturbauteile (20 bis 26) ausgerichtet sind.

11. Fahrradrahmen nach irgendeinem der Ansprüche 9 und 10, **dadurch gekennzeichnet, dass** die Hülle Fenster als Durchlass für die Federn umfasst, die zur Montage am Rahmen (3) an den Enden der Strukturbauteile (20 bis 26) angeordnet sind.

12. Fahrradrahmen nach irgendeinem der vorherigen Ansprüche, **dadurch gekennzeichnet, dass** eine Zelle, die zumindest durch die Diagonalausfachung des Gerippes (4) gebildet wird, verwendet wird, um ein Fach (29) zur Aufnahme einer Batterie zu bilden.

13. Fahrradrahmen nach Anspruch 12, **dadurch gekennzeichnet, dass** das Fach (29) zwischen dem hinteren Verbindungselement (5) und dem oberen Träger (18) oder dem unteren Träger (19) angeordnet ist.

14. Fahrradrahmen nach Anspruch 13, **dadurch gekennzeichnet, dass** zumindest ein Strukturbauteil (23, 24, 25), das das besagte Fach (29) eingrenzt, mit zumindest dem unteren (19) und/ oder dem oberen (18) Träger und mit dem hinteren Verbindungselement (5) in Eingriff steht.

15. Fahrradrahmen nach irgendeinem der Ansprüche 13 und 14, **dadurch gekennzeichnet, dass** zumindest ein Strukturbauteil (25, 26), das das besagte Fach (29) eingrenzt, mit einem Verstrebungselement (27), aus dem das Gerippe besteht, und mit dem hinteren Verbindungselement (5) oder mit einem mittleren Verbindungselement (11) in Eingriff steht.

16. Fahrradrahmen nach Anspruch 13, **dadurch gekennzeichnet, dass** ein Strukturbauteil (23), das das Fach (29) eingrenzt, nur mit dem oberen Träger (18) in Eingriff steht, und dieses als Abdeckung zum Verschließen des Faches (29) angeordnet ist.

17. Fahrrad umfassend einen Rahmen nach irgendeinem der vorherigen Ansprüche.

18. Fahrrad nach Anspruch 17, **dadurch gekennzeichnet, dass** das Fahrrad mit Antriebsvorrichtungen ausgestattet ist, die mit Muskelkraft oder elektrischer Energie betrieben werden.
